# EUROPEAN PATENT APPLICATION

(11) **EP 2 680 250 A1**
(43) Date of publication of application: **01.01.2014**
(21) Application number: 11859398.7
(22) Date of filing: 21.10.2011
(51) Int. Cl.: G09B 7/02, G09B 19/04, G09B 19/06, G06Q 50/00

(54) **CONVERSATION MANAGEMENT METHOD, AND DEVICE FOR EXECUTING SAME**

(30) Priority: 24.02.2011 KR 20110016755
(71) Applicant: Postech Academy-Industry Foundation, Pohang-si, Gyeongsangbuk-do 790-784 (KR)
(72) Inventor: LEE, Geun-Bae, Pohang-si, Gyeongsangbuk-do 790-751 (KR); LEE, Sung-Jin, Pohang-si, Gyeongsangbuk-do 790-784 (KR); NOH, Hyung-Jong, Incheon 403-764 (KR); LEE, Kyu-Song, Seoul 138-240 (KR)
(74) Representative: Zinkler, Franz
(86) International application number: PCT/KR2011/007906
(87) International publication number: WO 2012/115324

(57) **Abstract**

Disclosed are a conversation management method and a device for executing same are disclosed. The device includes: a calculation unit for calculating the importance of an utterance intention, the similarity between utterance intentions, and the relative distance between utterance intentions using at least one of a plurality of utterance intentions in a corpus and an utterance intention in a sequence relationship with the at least one utterance intention; a similarity calculating unit for calculating the similarity between conversation flows by comparing a conversation flow obtained from a corpus and a conversation flow obtained from a user utterance by means of the importance and similarity of an utterance intention; and an utterance intention verifying unit for calculating an evaluation score of an utterance intention by evaluating a user utterance according to the relative distance between utterance intentions. Accordingly, the present invention enables the flow-processing of various conversations which are not processed in a typical information obtaining conversation device, and also determines the ranking of appropriate utterance intentions in each conversational situation by means of a score calculated by a ranking function in order to output the ranking.

## Description

### [Technical Field]

The present invention relates generally to a method of managing a conversation and an apparatus for the same, and more specifically, to a method of managing a conversation using rankings of utterance intentions and an apparatus for the same.

### [Background Art]

It has been known that a method of studying a foreign language is to live in a country in which the foreign language is spoken as a mother tongue and to learn the culture and the customs from the locals along with the language, or to learn the language from a native-speaking teacher who speaks the language as a mother tongue in one's own country. However, both present financial burdens since learning costs are high. Further, the conventional methods for learning a language have spatial and time constraints of visiting the foreign country or periodically meeting a native-speaking teacher.

In order to overcome the financial burdens and the spatial and time constraints caused by the conventional methods for learning a foreign language, learning methods by a computer apparatus have been developed. Conventional methods for learning a foreign language by a computer apparatus include providing simple information, learning materials, or solutions to problems. In foreign language conversation education, a conversation progresses in sequence in a given scenario, and a learner only learns the language used in the given sentences in the given situation.

In order to solve these problems, methods of teaching a foreign language conversation using a conversation system in which a computer instead of a native speaker performs a one-on-one conversation with the learner have been suggested. In the conventional conversation systems, for information services such as a reservation of a hotel/train/flight or a guide for a bus route/room vacancy, a computer communicates with a user to recognize and provide a reservation or information desired by the user. Once such conventional conversation systems have been developed for English conversations, the conversation systems may be used to study English conversations to booking a hotel or a flight or to search for a bus route or a room vacancy.

However, the conventional conversation systems have been developed in consideration of conversation flows only for information services for specific purposes, and the conversation management methods use planned conversation in which only a given conversation flow is considered or are based on exercises and examples in which the flow of the conversation is difficult to control. Therefore, a method of controlling a conversation flow in consideration of various conversation flows which may be presented in a real domain that is appropriate for teaching foreign language conversation is needed. Further, regardless of the planned conversation or the exercises and examples, conventional conversation systems are configured such that a conversation always progresses in an optimal conversation flow in order to quickly provide correct information and a correct reservation for the user. In the most conversation systems, the optimal conversation flow is the shortest conversation flow, and the system progresses so that the conversation ends as soon as possible. Therefore, the conventional systems may not provide various English experiences to learners.

Further, when dealing with a conversation in which a number of utterance intentions are presented, the conventional system provides a system utterance without considering a conversation flow and the importance of utterance intentions in detail. Further, as to a user utterance, the system cannot provide candidates of expected utterances.

### [Disclosure]

### [Technical Problem]

A first purpose of the present invention to solve the problems described above is to provide an apparatus for managing a conversation.

A second purpose of the present invention to solve the problems described above is to provide an apparatus for managing a conversation.

### [Technical Solution]

To achieve the first purpose of the present invention described above, an apparatus for managing a conversation according to an embodiment of the present invention includes a calculator that uses at least one utterance intention among utterance intentions in a predetermined corpus and utterance intentions before and after the utterance intention and calculates importance of the utterance intentions, similarities between the utterance intentions, and relative distances between the utterance intentions; a similarity calculator that uses the importance and the similarities of the utterance intentions to compare a conversation flow obtained from the predetermined corpus and a conversation flow so far between a user and an education apparatus, and calculates a similarity between the conversation flows according to the comparison result; and an utterance intention verification unit that evaluates an utterance of the user according to the relative distances between the utterance intentions to calculate an utterance intention evaluation score.

To achieve the second purpose of the present invention described above, a method for managing a conversation according to an embodiment of the present invention includes a first calculation step of using at least one utterance intention among utterance intentions in a predetermined corpus and utterance intentions before and after the utterance intention and calculating importance of the utterance intentions, similarities between the utterance intentions, and relative distances between the utterance intentions; a similarity calculation step of using the importance and the similarities of the utterance intentions to compare a conversation flow obtained from the predetermined corpus and a conversation flow so far between a user and an education apparatus, and calculating a similarity between the conversation flows according to the comparison result; and an utterance intention verification step of evaluating an utterance of the user according to the relative distances between the utterance intentions to calculate an utterance intention evaluation score.

### [Advantageous Effects]

When using the method for managing the conversation and the apparatus for the same according to the present invention described above, various conversation flows that may not be processed in the conventional information acquisition conversation system may be processed, proper utterance intentions in each conversation circumstance may be ranked according to scores calculated by a ranking function and the ranks may be output. According to the present invention, scores with respect to utterance intentions may be generated and utterance intentions of the user may be verified using relative distance information between utterance intentions. Further, the similarity of conversation flows when there are a plurality of utterances of a user and a system in each turn, which has been difficult to calculate according to the conventional art, may be calculated using a Levenshtein distance edit-distance method.

### [Description of Drawings]

FIG. 1 is a block diagram schematically illustrating an internal structure of an apparatus for managing a conversation according to an embodiment of the present invention.
FIG. 2 is a flowchart illustrating a method for managing a conversation according to an embodiment of the present invention.

### [Modes of the Invention]

Since the present invention may be modified in various forms, and may have various embodiments, the following exemplary embodiments are illustrated in the accompanying drawings, and are described in detail with reference to the drawings. However, this is not intended to limit the present invention to specific embodiments, and the present invention should be construed to encompass various changes, equivalents, and substitutions within the technical scope and spirit of the invention. Like numbers refer to like elements throughout in the description of each drawing.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Hereinafter, various embodiments of the present invention will be described with reference to the accompanying drawings.

Although an apparatus for managing a conversation according to an embodiment of the present invention will be described herein with regard to a method for managing an English conversation based on a ranking of utterance intention, a language for education is not necessarily limited to English.

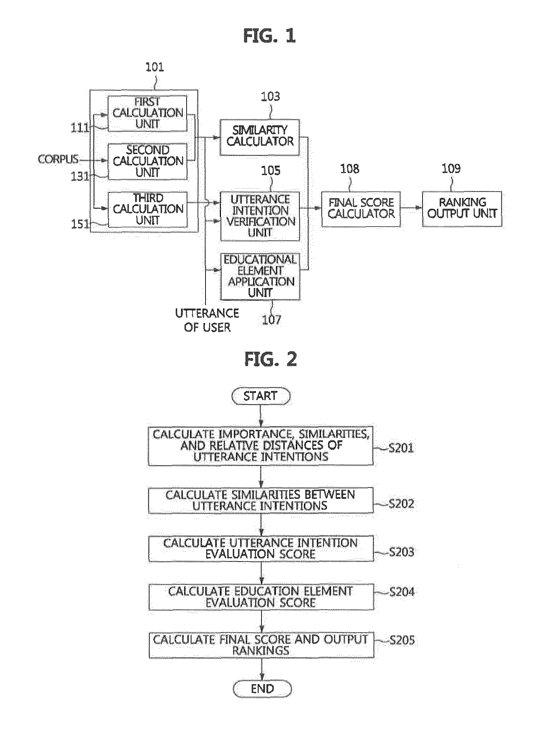

FIG. 1 is a block diagram schematically illustrating an internal structure of an apparatus for managing a conversation according to an embodiment of the present invention.

An apparatus for managing a conversation may include a calculator 101, a similarity calculator 103, an utterance intention verification unit 105, an educational element application unit 107, a final score calculator 108, and a ranking output unit 109. The calculator 101 may include a first calculation unit 111, a second calculation unit 131, and a third calculation unit 151.

The first calculation unit 111 calculates the importance of an utterance intention based on the comparison result between at least one utterance intention of the plurality of utterance intentions included in a predetermined corpus and utterance intentions before and after the utterance intention. Here, the utterance intention means an intention of a sentence uttered by a user or an education apparatus. For example, if the user utters "I'm looking for a bank," the intention of the sentence uttered by the user is to ask for directions, so the utterance intention may be indicated as "request/location." In this manner, the apparatus for managing a conversation according to an embodiment of the present invention may predict the next utterance intention according to the flow of the utterance intentions so far by recognizing utterance intentions for respective utterances.

According to an embodiment of the present invention, if one utterance intention among the plurality of utterance intentions included in the predetermined corpus is utterance intention A of asking for directions, the utterance intention before utterance intention A of asking for directions is utterance intention B of asking if help is needed, and the utterance intention after utterance intention A of asking for directions is intention C of providing directions, the first calculation unit 111 determines that utterance intention A of asking for directions does not have various kinds of utterance intentions before and after it, and determines that the importance of utterance intention A of asking for directions is high. Meanwhile, according to another embodiment of the present invention, if utterance intention D of agreeing with one's partner's opinion has various kinds of utterance intentions before and after it, the first calculation unit 111 determines that the importance of utterance intention D of agreeing with one's partner's opinion is low.

The second calculation unit 131 receives an utterance intention from the first calculation unit 111, recognizes the distribution status of the received utterance intention and utterance intentions before and after the received utterance intention based on the predetermined corpus, and calculates the similarity between the utterance intentions. According to an embodiment of the present invention, the first calculation unit 111 calculates the similarity between utterance intention A of asking for directions and utterance intention B of asking if help is needed, which is before utterance intention A of asking for directions, as follows. The second calculation unit 131 calculates a first distribution map "a" of utterance intentions before and after utterance intention A of asking for directions with respect to every case in which utterance intention A of asking for directions is presented from the predetermined corpus, calculates a second distribution map "b" of utterance intentions before and after utterance intention B of asking if help is needed with respect to every case in which utterance intention B of asking if help is needed is presented from the predetermined corpus, compares the first distribution map "a" with the second distribution map "b," and calculates the similarity of the utterance intentions.

The third calculation unit 151 combines an utterance intention with all utterance intentions before and after the utterance intention, and calculates relative distances with respect to all combinable pairs of the utterance intentions. According to an embodiment of the present invention, when one utterance intention among a plurality of utterance intentions included in a predetermined corpus is utterance intention A of asking for directions, and an utterance intention before utterance intention A of asking for directions is utterance intention B of asking if help is needed, the third calculation unit 151 combines utterance intention A of asking for directions with utterance intention B of asking if help is needed, and calculates, for example, the number of conversations in which utterance intention A of asking for directions and utterance intention B of asking if help is needed occur simultaneously, the number of conversations in which utterance intention A of asking for directions occurs before utterance intention B of asking if help is needed, and a relative distance between utterance intention A of asking for directions and utterance intention B of asking if help is needed in the cases in which utterance intention A of asking for directions occurs before utterance intention B of asking if help is needed.

The similarity calculator 103 receives the importance of the utterance intentions from the first calculation unit 111, receives the similarity between utterance intentions from the second calculation unit 131, and receives an utterance of a user from the user. The similarity calculator 103 uses the importance of the received utterance intention and the similarity between the utterance intentions, compares an exemplary conversation flow obtained from the predetermined corpus and the conversation flow obtained from the utterance of the user, and calculates the similarity between the conversation flows. According to an embodiment of the present invention, the similarity calculator 103 compares the exemplary conversation flow obtained from the predetermined corpus and the conversation flow obtained from the utterance of the user based on the Levenshtein distance edit-distance method, and calculates the similarity between the conversation flows. However, since the conventional Levenshtein distance edit-distance method does not consider the importance and the similarity of utterance intentions, and gives previous utterances and the recent utterances the same degree of importance, the present invention provides an improved Levenshtein distance edit-distance method. The details of the method additionally presented are as follows. First, a cost generated at the time of inserting, deleting, and replacing an utterance intention is applied not as a constant, but as a numerical value of importance of each utterance intention. Second, considering the similarity between the utterances to be substituted at the time of replacing the utterance intention, the replacement cost is applied to be decreased as the similarity is larger. Third, when the cost generated at the time of inserting, deleting, and replacing the utterance intention is calculated, the larger cost is applied for the more recently generated utterance intention.

The utterance intention verification unit 105 receives a relative distance between the utterance intentions from the third calculation unit 151, receives an utterance of the user from the user, uses the received relative distance between the utterance intentions, determines whether the utterance of the user is appropriate, and calculates a score of the utterance intention. According to an embodiment of the present invention, if the utterance intention of the user which is desired to be verified is utterance intention A and the user utterance intentions and the utterance intentions of an education apparatus which have been generated so far in the progress of the conversation are utterance intentions B, C, and D, the utterance intention verification unit 105 combines utterance intention A of the user which is desired to be verified with utterance intentions B, C, and D of the user and the education apparatus which have been generated so far in the progress of the conversation, and with regard to combinations of utterance intentions A and B, utterance intentions A and C, and utterance intentions A and D, first calculates the number of conversations in which utterance intentions A and B occur simultaneously, the number of conversations in which the utterance intention A occurs before the utterance intention B, and a relative distance between the utterance intentions A and B with respect to the starting point of the conversation in the cases in which the utterance intention A occurs before the utterance intention B.

The utterance intention verification unit 105 gives a higher score when there are more cases in which utterance intention A occurs after utterance intention B, C, or D based on the calculation results, and gives a lower score when there are fewer cases in which utterance intention A is not presented after utterance intention B, C, or D. Further, the utterance intention verification unit 105 compares the relative distance with the utterance intention received from the third calculation unit 151 and gives a higher score if the relative distance is similar to the utterance intention received from the third calculation unit 151 and gives a lower score if the relative distance is not similar to the utterance intention received from the third calculation unit 151. At this point, if a score given to the utterance intention is lower than the threshold value, the utterance intention verification unit 105 determines that the utterance of the user is wrong, and feeds the determination back to the user. If a score given to the utterance intention is higher than the threshold value, the utterance intention verification unit 105 transmits the corresponding score to the final score calculator 108.

The educational element application unit 107 receives the user's utterance from the user, and uses the received utterance of the user to calculate a score relating to a foreign language education element. For the purpose of English education, it is preferable to present more various utterances in a conversation. Therefore, the educational element application unit 107 of an apparatus for managing a conversation according to an embodiment of the present invention checks each candidate of the utterance intention for whether the utterance has occurred previously, and gives a lower score if the utterance has occurred previously. If a learning level of the user is known, the educational element application unit 107 gives a higher score to a sentence with an appropriate difficulty level according to the foreign language learning level so that the conversation can progress according to the level of the user. In addition, there may be certain constraints according to the subject or the circumstance of the conversation. The constraints are calculated as a score, and transmitted to the final score calculator 108.

The final score calculator 108 receives the similarity between the conversation flows from the similarity calculator 103, receives a score corresponding to the appropriateness of the utterance of the user from the utterance intention verification unit 105, and receives a score relating to the foreign language education element from the educational element application unit 107. The final score calculator 108 calculates a final score of an expected utterance intention based on the received scores that correspond to the similarity between the conversation flows, the appropriateness of the utterance of the user, and the foreign language education element.

The ranking output unit 109 receives the final score from the final score calculator 108, and outputs rankings of the expected utterance intentions. According to an embodiment of the present invention, the ranking output unit 109 may output one expected utterance intention at the highest ranking or all the high-ranked utterance intentions in the N-best list in order to help study of the user who is not used to a conversation in a foreign language so that the user may study various expressions. Hereinafter, with reference to FIG. 2, a method for managing a conversation according to an embodiment of the present invention will be described.

FIG. 2 is a flowchart illustrating a method for managing a conversation according to an embodiment of the present invention.

With reference to FIG. 2, an apparatus for managing a conversation uses at least one utterance intention among a plurality of utterance intentions included in a predetermined corpus and utterance intentions before and after the utterance intention and calculates the importance of the utterance intentions, the similarity between the utterance intentions, and relative distances between the utterance intentions in Step S201. More specifically, the apparatus for managing the conversation calculates the importance of the utterance intention according to the result of comparing at least one utterance intention among the plurality of utterance intentions included in the predetermined corpus with the utterance intentions before and after the utterance intention. Further, the apparatus for managing the conversation recognizes the distribution status of the received utterance intention and utterance intentions before and after the received utterance intention based on the predetermined corpus, calculates the similarity of the utterance intentions, combines the utterance intention and all the utterance intentions before and after the utterance intention, and calculates relative distances with respect to all combinable pairs of the utterance intentions.

The apparatus for managing the conversation uses the importance and the similarity of the utterance intentions, compares a conversation flow obtained from the predetermined corpus and a conversation flow obtained from an utterance of the user, and calculates the similarity between the conversation flows based on the comparison result in step S202. The apparatus for managing the conversation evaluates an utterance of the user according to the relative distances between the utterance intentions to calculate an utterance intention evaluation score in step S203, and uses the received utterance of the user to calculate a score relating to a foreign language education element in step S204. Subsequently, the apparatus for managing the conversation uses the similarity between the flows, the utterance intention evaluation score, and the education element evaluation score to calculate a final score, and outputs rankings of estimated utterance intentions based on the final score in step S205.

Exemplary embodiments of the present invention have been described, but those of ordinary skill in the art will recognize that various changes and modifications of the embodiments described herein can be made without departing from the scope and spirit of the invention.

## Claims

1. An apparatus for managing a conversation, the apparatus comprising:
a calculator that uses at least one utterance intention among utterance intentions in a predetermined corpus and utterance intentions before and after the utterance intention and calculates importance of the utterance intentions, similarities between the utterance intentions, and relative distances between the utterance intentions;
a similarity calculator that uses the importance and the similarities of the utterance intentions to compare a conversation flow obtained from the predetermined corpus and a conversation flow so far between a user and an education apparatus, and calculates a similarity between the conversation flows according to the comparison result; and
an utterance intention verification unit that evaluates an utterance of the user according to the relative distances between the utterance intentions to calculate an utterance intention evaluation score.

2. The apparatus according to claim 1, wherein the similarity calculator applies the importance of the utterance intentions to a cost generated when at least one operation among insertion, deletion, or replacement between the utterance intentions is performed to calculate a similarity between the conversation flows.

3. The apparatus according to claim 1, wherein the utterance intention verification unit determines that the utterance of the user has an error when the evaluation score is lower than a predetermined score and feeds the determination back to the user.

4. The apparatus according to claim 1, wherein the utterance intention verification unit combines the utterance of the user and utterances generated so far in the progress of the conversation to calculate relative distances with respect to combined pairs, and calculates the utterance intention evaluation score according to the calculated relative distances.

5. The apparatus according to claim 1, wherein the calculator recognizes a distribution status of the utterance intention and the utterance intentions before and after the utterance intention based on the predetermined corpus to calculate similarity between the utterance intentions.

6. The apparatus according to claim 1, wherein the calculator combines the utterance intention and all utterance intentions before and after the utterance intention based on the predetermined corpus to calculate relative distances of combined pairs of the utterance intentions.

7. The apparatus according to claim 1, further comprising an educational element application unit that calculates an education element evaluation score corresponding to a foreign language education element.

8. The apparatus according to claim 1, further comprising a final score calculator that uses a similarity between the conversation flows, the utterance intention evaluation score, and the education element evaluation score to calculate a final score.

9. The apparatus according to claim 1, further comprising a ranking output unit that outputs rankings of expected utterance intentions based on a final score.

10. A method for managing a conversation, the method comprising:
a first calculation step of using at least one utterance intention among utterance intentions in a predetermined corpus and utterance intentions before and after the utterance intention and calculating importance of the utterance intentions, similarities between the utterance intentions, and relative distances between the utterance intentions;
a similarity calculation step of using the importance and the similarities of the utterance intentions to compare a conversation flow obtained from the predetermined corpus and a conversation flow so far between a user and an education apparatus, and calculating a similarity between the conversation flows according to the comparison result; and
an utterance intention verification step of evaluating an utterance of the user according to the relative distances between the utterance intentions to calculate an utterance intention evaluation score.

11. The method according to claim 10, wherein the similarity calculation step includes applying the importance of the utterance intentions to a cost generated when at least one operation among insertion, deletion, or replacement between the utterance intentions is performed to calculate a similarity between the conversation flows.

12. The method according to claim 10, wherein the utterance intention verification step includes determining that the utterance of the user has an error when the evaluation score is lower than a predetermined score and feeding the determination back to the user.

13. The method according to claim 10, wherein the utterance intention verification step includes combining the utterance of the user and utterances generated so far in the progress of the conversation to calculate relative distances with respect to combined pairs, and calculating the utterance intention evaluation score according to the calculated relative distances.

14. The method according to claim 10, wherein the first calculation step includes recognizing a distribution status of the utterance intention and the utterance intentions before and after the utterance intention based on the predetermined corpus to calculate similarity between the utterance intentions.

15. The method according to claim 10, wherein the first calculation step includes combining the utterance intention and all utterance intentions before and after the utterance intention based on the predetermined corpus to calculate relative distances of combined pairs of the utterance intentions.

16. The method according to claim 10, further comprising calculating an education element evaluation score corresponding to a foreign language education element.

17. The method according to claim 10, further comprising calculating a final score using a similarity between the conversation flows, the utterance intention evaluation score, and the education element evaluation score.

18. The method according to claim 10, further comprising outputting rankings of expected utterance intentions based on a final score.
